# EUROPÄISCHE PATENTSCHRIFT

(11) **EP 2 966 412 B1**
(45) Veröffentlichungstag und Bekanntmachung des Hinweises auf die Patenterteilung: **04.01.2017**
(21) Anmeldenummer: 15173231.0
(22) Anmeldetag: 23.06.2015
(51) Int. Cl.: G01D 3/036, G01D 11/24

(54) **SENSOR MIT KONDENSATIONSFALLE**
Sensor with condensation trap
Capteur avex piège à condensation

(30) Priorität: 09.07.2014 DE 102014109618
(43) Veröffentlichungstag der Anmeldung: 13.01.2016
(73) Patentinhaber: SICK AG, 79183 Waldkirch (DE)
(72) Erfinder: KROLL, Ruslan, 79206 Breisach (DE); SPREEMANN, Dirk, 79244 Münstertal (DE)

(56) Entgegenhaltungen:
- EP-A2- 2 631 437
- US-A- 5 045 051
- US-A- 5 289 715
- US-B1- 6 866 092
- US-B2- 7 070 755

## Beschreibung

Die vorliegende Erfindung betrifft einen optischen Sensor mit einem Sensorgehäuse und einer Kondensationsfalle.

In vielen Anwendungen von Sensoren lässt sich je nach Umgebungsbedingungen, insbesondere bei Sensoren mit Kunststoffgehäusen nicht vermeiden, dass es nach einiger Zeit einen Anstieg der Feuchtigkeit im Sensorinneren gibt. Dies liegt zum einen an der Feuchtigkeitsaufnahme von Kunststoffen durch Diffusionsprozesse aber auch an begrenzten Dichtigkeiten, wie sie typischerweise an Bedienelementen, Anschlussschnittstellen, beispielsweise an Steckern oder Kabeln, an Klebeschnittstellen oder an Ultraschallschweißungen von z. B. Gehäusedeckeln oder Front-scheiben auftreten.

Prinzipiell kann die Feuchtigkeitsaufnahme durch verschiedene Maßnahmen, z. B. Beschichtungen reduziert werden. Es lässt sich aber insbesondere bei Kunststoffgehäusen wohl nie gänzlich vermeiden, dass sich die Wasseraufnahme der Bauteile früher oder später der Sättigungskonzentration nähert. Die Sättigungskonzentration ist in der Anwendung durch die vorliegenden thermodynamischen Verhältnisse hauptsächlich durch die Temperatur und die relative Luftfeuchte vorgegeben.

Wird ein Sensor nun in feuchtem Zustand angeschaltet, erwärmt sich der Sensor und folglich verdampft das gespeicherte Wasser aus den Bauteilen, was zu einem Anstieg des Wassergehalts und der absoluten Feuchte in der Luft im Innern des Sensors führt. Dies führt zur Kondensation an allen Stellen im Sensor, an denen die Taupunkttemperatur unterschritten wird, was typischerweise die Frontscheibe aber je nach Geräteaufbau auch Gehäuseinnenwände und Flächen anderer Bauteile sein können. Im Fall der Frontscheibe kann der Beschlag Funktionseinschränkungen des Sensors verursachen oder aber der Sensor wird vom Kunden reklamiert, da dieser vermeintlich undicht ist. Dieser Kondensations- oder Beschlagprozess kann transient verlaufen oder im schlechtesten Fall sogar stationär verbleiben, so dass sich der Beschlag oder daraus gebildete Tröpfchen nicht mehr von der Frontscheibe verschwinden.

Um relevante Bereiche beschlagfrei zu halten, ist es ein genereller Ansatz, die Temperatur dieser Bereiche zu erhöhen. Dies kann passiv durch Ankopplung an z. B. Wärmeleitbleche erfolgen, aber auch aktiv durch zusätzliche Heizwiderstände, die z. B. in Form von Beschichtungen auch direkt auf der Frontscheibe angebracht sind, ähnlich einer Heckscheibenheizung bei Kraftfahrzeugen.

Eine generelle Lösung der Beschlagproblematik bildet eine aktive Heizung. Allerdings erfordert dies, die Heizwiderstände direkt auf der Frontscheibe aufzubringen, beispielsweise durch Beschichtung bzw. die Heizwiderstände direkt hinter der Frontscheibe vorzusehen. Beides ist mit entsprechendem technologischem Aufwand verbunden und erhöht den Flächenbedarf durch zusätzliche Platinen, Ansteuerung der Heizung, elektrische und thermische Kontaktierung der Frontscheibe und ist mit zusätzlichem Kostenaufwand verbunden.

Die DE 10 2008 004 642 A1 offenbart eine Vorrichtung mit mindestens einem feuchtigkeitsempfindlichen Bauelement mit mindestens einer feuchtigkeitsempfindlichen Oberfläche sowie mindestens eine Abschirmvorrichtung zur Abschirmung des feuchtigkeitsempfindlichen Bauelements vor Feuchtigkeit, wobei die Abschirmvorrichtung mindestens ein Gehäuse aufweist, welches eingerichtet ist, um in mindestens einem Innenraum des Gehäuses das feuchtigkeitsempfindliche Bauelement aufzunehmen, wobei die Vorrichtung mindestens eine dem Innenraum zuweisende feuchtigkeitsunempfindliche Kondensationsoberfläche aufweist, welche mindestens die 100-fache Oberfläche im Vergleich zur feuchtigkeitsempfindlichen Oberfläche aufweist.

Die EP 2 631 437 A2 offenbart eine Wasserfalle mit einer Hitzesenke zur Kondensation von Wasser für eine Gasturbine.

Die US 7 070 755 B2 offenbart ein Phasenwechselmaterial als Hitzesenke.

Die US 5 289 715 A offenbart ein akustisches Interferometer mit einer Hitzesenke aus Kupfer.

Die US 5 045 051 A offenbart eine thermoelektrische Kondensationsfalle für einen Feuchtesensor.

Die US 6 866 092 B1 offenbart ein luftdichtes Wärmeverteilsystem mit einer Hitzesenke.

Eine Aufgabe der Erfindung besteht darin, eine Beschlagbildung in einem Sensorgehäuse zu vermeiden und einen verbesserten Sensor bereitzustellen.

Die Aufgabe wird gemäß Anspruch 1 gelöst.

Gemäß der Erfindung ist der Sensor ein optischer Sensor, insbesondere eine Lichtschranke, ein Lichttaster, ein Distanzsensor oder ein Laserscanner. Bei optischen Sensoren ist die Bildung von Kondensation an optischen Flächen besonders kritisch, da das Licht an den optischen Flächen durch die Kondensation unerwünscht gebrochen wird und der Sensor in seiner Funktion beeinträchtigt wird oder sogar funktionsuntüchtig wird. Durch das Anordnen des Latentwärmespeichers innerhalb des Sensorgehäuses wird die Kondensation an den optischen Flächen des optischen Sensors wirksam verkleinert oder sogar ganz verhindert.

Ein Latentwärmespeicher ist eine Einrichtung, welche die thermische Energie mit vielen Wiederholungszyklen und über lange Zeit speichern kann. Gemäß der Erfindung werden hierzu Phasenwechselmaterialien als Latentwärmespeicher genutzt, deren latente Schmelzwärme, Lösungswärme oder Absorptionswärme wesentlich größer ist als die Wärme, die sie aufgrund ihrer normalen spezifischen Wärmekapazität speichern können. Das Phasenwechselmaterial weist hierbei einen Schmelzpunkt auf.

Latentwärmespeicher funktionieren durch die Ausnutzung der Enthalpie thermodynamischer Zustandsänderungen eines Speichermediums. Das dabei erfindungsgemäß bevorzugte genutzte Prinzip ist die Ausnutzung des Phasenübergangs von fest nach flüssig und umgekehrt, also die Phasenübergänge Erstarren und Schmelzen.

Als Phasenwechselmaterialen gemäß der Erfindung eignen sich spezielle Salze oder Paraffine. Diese werden bei Erwärmung geschmolzen, die dabei sehr viel Wärmeenergie, nämlich Schmelzwärme aufnehmen, wodurch jedoch die Eigentemperatur nahezu konstant bleibt. Das Entladen findet als Erstarren statt, wobei das Speichermedium die zuvor aufgenommene Wärmemenge als Erstarrungswärme wieder an die Umgebung abgibt. Ein Beispiel für ein Phasenwechselmaterial ist Dikaliumhydrogenphosphat-Hexahydrat.

Der Vorteil dieser Wärmespeichertechnik beruht darauf, in einem kleinen, durch die Schmelztemperatur des eingesetzten Phasenwechselmaterials festgelegten, Temperaturbereich eine Verzögerung der Erwärmung zu bewirken mit einer relativ kleinen Masse.

Die gemäß der Erfindung eingesetzten Latentwärmespeicher haben im Vergleich zu reinem Kupfer typischerweise eine um den Faktor 5 größere spezifische Wärmekapazität. Dabei wird der Effekt ausgenutzt, dass der Schmelzvorgang von fest nach flüssig bei nahezu konstanter Temperatur abläuft und während des Phasenwechsels hohe Wärmemengen gespeichert werden können.

Wird nun ein erfindungsgemäßer Sensor mit dem Latentwärmespeicher elektrisch eingeschaltet, wird die Verlustleistung eine Erwärmung des Sensors hervorrufen. An der Stelle des Latentwärmespeichers steigt die Temperatur jedoch so lange nicht an, bis das bisher feste Phasenwechselmaterial vollständig verflüssigt ist.

Das Phasenwechselmaterial wirkt gemäß der Erfindung rein passiv und erfordert keine elektrische Ansteuerung, wodurch eine hohe Zuverlässigkeit gewährleistet ist.

Erfindungsgemäß ist nun eine Kondensationsfalle geschaffen, an der sich Beschlag bilden kann, wohingegen die beschlagempfindlichen relevanten Bereiche des Sensors, wie beispielsweise Frontscheibe, Elektronik, Linse und/oder Optik usw. entsprechend entlastet werden, also dort, wo keine oder nur eine verminderte Beschlagbildung stattfindet.

In Weiterbildung der Erfindung ist der Latentwärmespeicher in einem Behälter angeordnet, wobei der Behälter innerhalb des Sensorgehäuses angeordnet ist. Der Behälter ist dabei vorzugsweise aus Metall gebildet. Jedoch kann der Behälter beispielsweise aus temperaturleitfähigem Kunststoff hergestellt werden. Die Behälter werden beispielsweise vor der Produktion des Sensors hergestellt, in dem das Phasenwechselmaterial in die Behälter abgefüllt wird. Anschließend werden die Behälter verschlossen und in das Sensorgehäuse eingesetzt und das Sensorgehäuse verschlossen. Die Behälter können in verschiedenen Formen hergestellt sein, so dass diese platzsparend in dem Sensorgehäuse angeordnet werden können. Der Behälter wird bevorzugt an bestimmten Stellen im Sensorgehäuse angeordnet, nämlich dort, wo die Kondensation am wenigstens stört, also möglichst weit weg von kondensationskritischen Bauteilen des Sensors.

In Weiterbildung der Erfindung weist der Sensor ein doppelwandiges Sensorgehäuse auf und der Latentwärmespeicher ist zwischen einer ersten Gehäusewand und einer zweiten Gehäusewand des doppelwandigen Sensorgehäuses angeordnet. Diese Ausführung hat den Vorteil, dass das Sensorgehäuse gleichzeitig als Kühlkörper funktioniert und der Punkt, bis das Phasenwechselmaterial gänzlich verflüssigt ist, länger dauert, also eine größere Zeit beansprucht.

In Weiterbildung der Erfindung weist der Latentwärmespeicher Phasenwechselmaterial auf, das mehrere unterschiedliche Schmelzpunkte aufweist. Da der Schmelzpunkt bei einer konkreten Temperatur stattfindet, hängt der Nutzen von der Temperatur am Einschaltzeitpunkt ab. Im Extremfall liegt die Schmelztemperatur des Phasenwechselmaterials unter der Einschalttemperatur des Sensors. In diesem Fall wäre das Phasenwechselmaterial zum Einschaltzeitpunkt bereits verflüssigt und es könnte sich dementsprechend kein Nutzen einstellen. Wird jedoch ein Phasenwechselmaterial mit mehreren unterschiedlichen Schmelzpunkten verwendet, so ist der Latentwärmespeicher auch bei unterschiedlichen Einschalttemperaturen wirksam.

In Weiterbildung der Erfindung weist der Latentwärmespeicher mehrere Kammern auf, die jeweils Phasenwechselmaterial mit unterschiedlichen Schmelzpunkten aufweisen. Dadurch sind im Sensor mehrere Phasenwechselmaterialen mit unterschiedlichen Schmelzpunkten in unterschiedlichen Kammern vorgesehen, so dass der Latentwärmespeicher auch bei unterschiedlichen Einschalttemperaturen wirksam ist.

In einer besonders bevorzugten Ausführungsform weist der Latentwärmespeicher ein Volumen von mindestens 0,5 cm³, insbesondere von mindestens 1 cm³ auf. Dadurch ist für übliche Sensorgehäusegrößen eine wirksame Kondensationsfalle gebildet.

In Weiterbildung der Erfindung weist der Latentwärmespeicher eine größere Oberfläche auf, als die Innenraumoberfläche des Sensors. Dadurch ist die Kondensationsoberfläche der Kondensationsfalle größer ausgebildet als die Innenraumoberfläche des Sensors. Dadurch ist ein verbesserter Kondensationsniederschlag an der Kondensationsoberfläche der Kondensationsfalle gewährleistet. Die Oberfläche des Latentwärmespeichers kann beispielsweise durch eine rippenartige oder nadelförmige Oberflächenstruktur in verschiedenen Dimensionen vergrößert werden.

In Weiterbildung ist der Latentwärmespeicher mit einem metallischen Körper insbesondere mit einem Kupferkörper oder Aluminiumkörper thermisch verbunden. Der metallische Körper bildet dabei ein Kühlkörper. Durch den Kühlkörper wird der Effekt des Phasenwechselmaterials noch verstärkt, da ein Teil der Energie, der für den Phasenwechsel notwendig ist, über den Kühlkörper abgeführt wird. Der metallische Körper ist dabei bevorzugt mit einer Außenseite des Sensorgehäuses verbunden.

In Weiterbildung der Erfindung weist der Sensor ein Trocknungsmittel auf. Trocknungsmittel, beispielsweise Silikagel haben die Eigenschaft, durch Adsorption Wasser bis zu einem bestimmten Grad aufnehmen zu können und somit eine zeitliche Verzögerung der Sättigung auf Grund eines zusätzlichen Wasserspeichers zu schaffen. Das Trocknungsmittel ist dabei vorzugsweise im Innern des Sensorgehäuses angeordnet, so dass die kondensierte Feuchtigkeit an dem Latentwärmespeicher von dem Trocknungsmittel aufgenommen wird. Dadurch wird die Feuchtigkeit der Innenraumatmosphäre des Sensors entzogen. Dadurch wird nach mehreren Einschaltzyklen die Feuchtigkeit der Innenraumatmosphäre wirksam verringert.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:
- Figur 1: einen erfindungsgemäßen Sensor, wobei der Latentwärmespeicher innerhalb des Sensorgehäuses angeordnet ist;
- Figur 2: einen erfindungsgemäßen Sensor, wobei der Latentwärmespeicher in einem Behälter angeordnet ist;
- Figur 3: einen erfindungsgemäßen Sensor, wobei der Latentwärmespeicher zwischen zwei Wänden eines doppelwandigen Gehäuse angeordnet ist;
- Figur 4: einen erfindungsgemäßen Sensor, wobei der Latentwärmespeicher mit einer Oberfläche ausgebildet ist, die größer ist als die Innenraumoberfläche des Sensors;
- Figur 5: einen Sensor mit einem Latentwärmespeicher und einem Trocknungsmittel;
- Figur 6: einen Sensor mit einem Latentwärmespeicher und einem metallischen Körper:

In den nachfolgenden Figuren sind identische Teile mit identischen Bezugszeichen versehen.

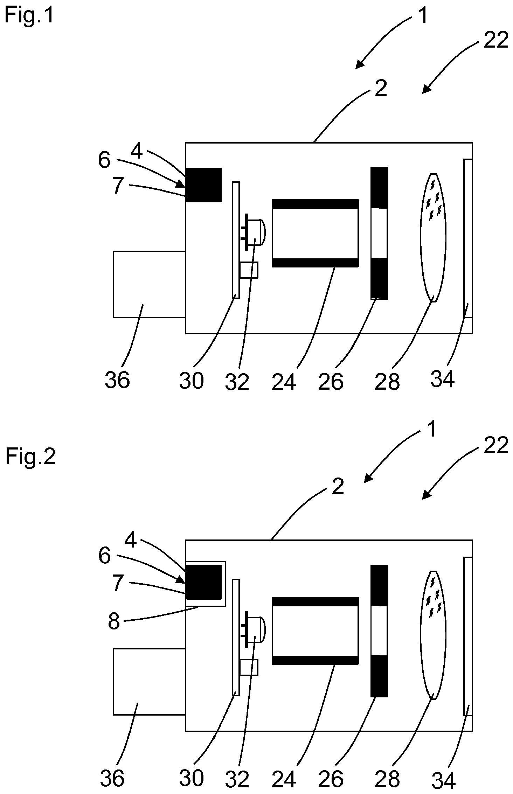

Figur 1 zeigt einen Sensor mit einem Sensorgehäuse 2 und mit einer Kondensationsfalle 4, wobei die Kondensationsfalle 4 durch einen Latentwärmespeicher 6 gebildet ist und wobei der Latentwärmespeicher 6 innerhalb des Sensorgehäuses 2 angeordnet ist.

Der Sensor 1 gemäß Figur 1 ist ein optischer Sensor 22, insbesondere eine Lichtschranke, ein Lichttaster, ein Distanzsensor oder ein Laserscanner. Der Sensor 1 ist dabei in Figur 1 nur schematisch dargestellt.

Der optische Sensor weist dabei typischerweise eine Leiterkarte 30 mit einem Lichtsender und/oder Lichtempfänger 32 auf. Vor dem Lichtsender ist ein Tubus 24 und optional eine Blende 26 angeordnet. Vor der Blende 26 ist eine Linse 28 angeordnet. Weiter weist der Sensor 1 einen elektrischen Anschluss 36 auf.

Damit die Lichtstrahlen das dichte Sensorgehäuse 2 durchdringen können, ist eine transparente Frontscheibe 34 an dem Sensorgehäuse angeordnet. Insbesondere die Frontscheibe 34 und die Linse 28 sollen während des Sensorbetriebes nicht beschlagen, da sonst die optischen Eigenschaften des Sensors 1 eingeschränkt sind, beispielsweise durch unerwünschte Lichtbrechung oder Trübung.

Der Latentwärmespeicher 6 besteht aus Phasenwechselmaterial 7, das einen Schmelzpunkt aufweist. Als Phasenwechselmaterialen 7 gemäß der Erfindung eignen sich spezielle Salze oder Paraffine. Der Latentwärmespeicher 6 kann auch aus Phasenwechselmaterial 7 bestehen, das mehrere unterschiedliche Schmelzpunkte aufweist. Weiter kann es vorgesehen sein, dass der Latentwärmespeicher 6 mehrere Kammern aufweist, die jeweils Phasenwechselmaterial 7 mit unterschiedlichen Schmelzpunkten aufweisen. Der Latentwärmespeicher 6 weist bevorzugt ein Volumen von mindestens 0,5 cm³, insbesondere von mindestens 1 cm³ auf.

Gemäß Figur 2 ist der Latentwärmespeicher 6 in einem Behälter 8 angeordnet, wobei der Behälter 8 innerhalb des Sensorgehäuses 2 angeordnet ist. Der Behälter 8 kann für verschiedene Sensoren 1 unterschiedliche Formen aufweisen.

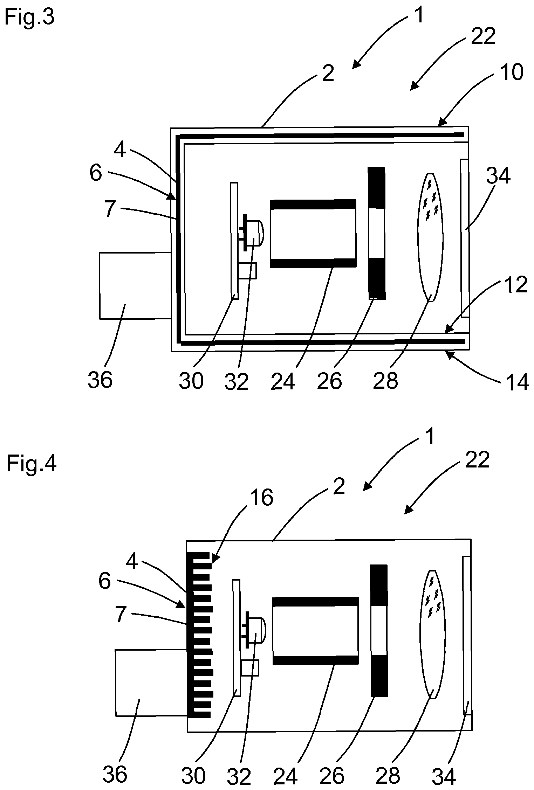

Figur 3 zeigt einen Sensor 1, der ein doppelwandiges Sensorgehäuse 10 aufweist und der Latentwärmespeicher 6 zwischen einer ersten Gehäusewand 12 und einer zweiten Gehäusewand 14 des doppelwandigen Sensorgehäuses 10 angeordnet ist.

Gemäß der schematischen Figur 4 weist der Latentwärmespeicher 6 eine größere Oberfläche 16 auf, als die Innenraumoberfläche des Sensors 1. Die Oberfläche 16 des Latentwärmespeichers 6 kann hierzu eine Vielzahl von Rippen oder Stiften aufweisen, um eine hohe Oberfläche 16 auszubilden.

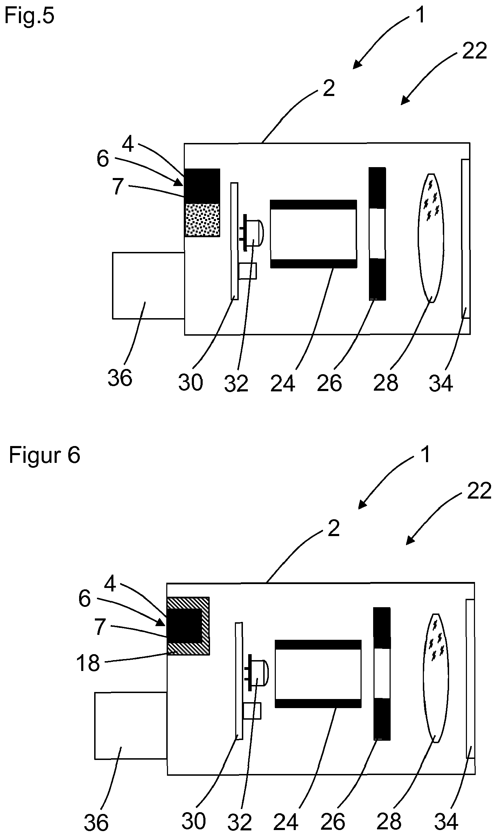

Gemäß Figur 5 weist der Sensor 1 neben dem Latentwärmespeicher 6 ein Trocknungsmittel 20 auf. Das Trocknungsmittel 20 kann die kondensierte Feuchtigkeit, welche sich an dem Latentwärmespeicher 6 bildet, dauerhaft aufnehmen.

Gemäß Figur 6 ist der Latentwärmespeicher 6 mit einem metallischen Körper 18, insbesondere mit einem Kupferkörper oder Aluminumkörper thermisch verbunden.

### Bezugszeichen:

- 1: Sensor
- 2: Sensorgehäuse
- 4: Kondensationsfalle
- 6: Latentwärmespeicher
- 7: Phasenwechselmaterial
- 8: Behälter
- 10: doppelwandiges Sensorgehäuse
- 12: erste Gehäusewand
- 14: zweite Gehäusewand
- 16: Oberfläche
- 18: metallischer Körper
- 20: Trocknungsmittel
- 22: optischer Sensor
- 24: Tubus
- 26: Blende
- 28: Linse
- 30: Leiterkarte
- 32: Lichtsender/Lichtempfänger
- 34: Frontscheibe
- 36: elektrischer Anschluss

## Patentansprüche

1. Sensor mit einem Sensorgehäuse (2) und mit einer Kondensationsfalle (4),
**dadurch gekennzeichnet, dass**
der Sensor ein optischer Sensor (22) ist,
die Kondensationsfalle (4) durch einen Latentwärmespeicher (6) gebildet ist, wobei der Latentwärmespeicher (6) innerhalb des Sensorgehäuses (2) angeordnet ist und der Latentwärmespeicher (6) Phasenwechselmaterial (7) aufweist, wobei beschlagsempfindliche relevante Bereiche des Sensors im Sensorgehäuse angeordnet sind und das Sensorgehäuse verschlossen ist.

2. Sensor nach Anspruch 1, wobei der Latentwärmespeicher (6) in einem Behälter (8) angeordnet ist, wobei der Behälter (8) innerhalb des Sensorgehäuses (2) angeordnet ist.

3. Sensor nach einem der vorhergehenden Ansprüche, wobei der Sensor (1) ein doppelwandiges Sensorgehäuse (10) aufweist und der Latentwärmespeicher (6) zwischen einer ersten Gehäusewand (12) und einer zweiten Gehäusewand (14) des doppelwandigen Sensorgehäuses (10) angeordnet ist.

4. Sensor nach einem der vorhergehenden Ansprüche, wobei der Latentwärmespeicher (6) Phasenwechselmaterial (7) aufweist, das mehrere unterschiedliche Schmelzpunkte aufweist.

5. Sensor nach einem der vorhergehenden Ansprüche, wobei der Latentwärmespeicher (6) mehrere Kammern aufweist, die jeweils Phasenwechselmaterial (7) mit unterschiedlichen Schmelzpunkten aufweisen.

6. Sensor nach einem der vorhergehenden Ansprüche, wobei der Latentwärmespeicher (6) ein Volumen von mindestens 0,5 cm³, insbesondere von mindestens 1 cm³ aufweist.

7. Sensor nach einem der vorhergehenden Ansprüche, wobei der Latentwärmespeicher (6) eine größere Oberfläche (16) aufweist als die Innenraumoberfläche des Sensors (1).

8. Sensor nach einem der vorhergehenden Ansprüche, wobei der Latentwärmespeicher (6) mit einem metallischen Körper (18), insbesondere mit einem Kupferkörper oder Aluminumkörper thermisch verbunden ist.

9. Sensor nach einem der vorhergehenden Ansprüche, wobei der Sensor (1) ein Trocknungsmittel (20) aufweist.

10. Sensor nach einem der vorhergehenden Ansprüche, wobei der Sensor (1) eine Lichtschranke, ein Lichttaster, ein Distanzsensor oder ein Laserscanner ist.

## Claims

1. A sensor having a sensor housing (2) and having a condensation trap (4),
**characterized in that**
the sensor is an optical sensor (22),
the condensation trap (4) is formed by a latent heat accumulator (6), with the latent heat accumulator (6) being arranged within the sensor housing (2) and the latent heat accumulator (6) comprising phase-change material (7), with relevant regions of the sensor susceptible to condensation being arranged in the sensor housing and the sensor housing being closed.

2. A sensor in accordance with claim 1, wherein the latent heat accumulator (6) is arranged in a container (8), with the container (8) being arranged within the sensor housing (2).

3. A sensor in accordance with one of the preceding claims, wherein the sensor (1) has a double-walled sensor housing (10) and the latent heat accumulator (6) is arranged between a first housing wall (12) and a second housing wall (14) of the double-walled sensor housing (10).

4. A sensor in accordance with any one of the preceding claims, wherein the latent heat accumulator (6) comprises phase-change material (7) that has a plurality of different melting points.

5. A sensor in accordance with any one of the preceding claims, wherein the latent heat accumulator (6) has a plurality of chambers that each comprise phase-change material (7) having different melting points.

6. A sensor in accordance with any one of the preceding claims, wherein the latent heat accumulator (6) has a volume of at least 0.5 cm³, in particular of at least 1 cm³.

7. A sensor in accordance with any one of the preceding claims, wherein the latent heat accumulator (6) has a larger surface (16) than the inner space surface of the sensor (1).

8. A sensor in accordance with any one of the preceding claims, wherein the latent heat accumulator (6) is thermally connected to a metal body (18), in particular to a copper body or to an aluminum body.

9. A sensor in accordance with any one of the preceding claims, wherein the sensor (1) comprises drying means (20).

10. A sensor in accordance with any one of the preceding claims, wherein the sensor (1) is a light barrier, an optical light sensor, a distance sensor or a laser scanner.

## Revendications

1. Capteur comportant un boîtier de capteur (2) et un piège de condensation (4),
**caractérisé en ce que**
le capteur est un capteur optique (22),
le piège de condensation (4) est formé par un accumulateur de chaleur latente (6), l'accumulateur de chaleur latente (6) étant agencé à l'intérieur du boîtier de capteur (2) et l'accumulateur de chaleur latente (6) présentant un matériau à changement de phase (7), des zones du capteur sensibles à la buée concernées étant agencées dans le boîtier de capteur et le boîtier de capteur étant fermé.

2. Capteur selon la revendication 1, dans lequel l'accumulateur de chaleur latente (6) est agencé dans un récipient (8), le récipient (8) étant agencé à l'intérieur du boîtier de capteur (2).

3. Capteur selon l'une des revendications précédentes, le capteur (1) présentant un boîtier de capteur à double paroi (10) et l'accumulateur de chaleur latente (6) étant agencé entre une première paroi de boîtier (12) et une deuxième paroi de boîtier (14) du boîtier de capteur à double paroi (10).

4. Capteur selon l'une des revendications précédentes, dans lequel l'accumulateur de chaleur latente (6) présente un matériau à changement de phase (7) qui présente plusieurs points de fusion différents.

5. Capteur selon l'une des revendications précédentes, dans lequel l'accumulateur de chaleur latente (6) présente plusieurs chambres qui présentent chacune un matériau à changement de phase (7) avec différents points de fusion.

6. Capteur selon l'une des revendications précédentes, dans lequel l'accumulateur de chaleur latente (6) présente un volume d'au moins 0,5 cm³, en particulier d'au moins 1 cm³.

7. Capteur selon l'une des revendications précédentes, dans lequel l'accumulateur de chaleur latente (6) présente une surface (16) plus grande que la surface intérieure du capteur (1).

8. Capteur selon l'une des revendications précédentes, dans lequel l'accumulateur de chaleur latente (6) est relié thermiquement avec un corps (18) métallique, en particulier avec un corps en cuivre ou un corps en aluminium.

9. Capteur selon l'une des revendications précédentes, le capteur (1) présentant un agent dessiccateur (20).

10. Capteur selon l'une des revendications précédentes, le capteur (1) étant une barrière lumineuse, un capteur de distance ou un scanner à laser.
